(19) Europäisches Patentamt
European Patent Office
Office européen des brevets

(11) EP 4 513 606 A1

(12) **EUROPEAN PATENT APPLICATION**
published in accordance with Art. 153(4) EPC

(43) Date of publication:
**26.02.2025 Bulletin 2025/09**

(21) Application number: **23791639.0**

(22) Date of filing: **30.03.2023**

(51) International Patent Classification (IPC):
***H01M 10/052** (2010.01)* ***H01M 4/134** (2010.01)*
***H01M 4/40** (2006.01)* ***H01M 10/0568** (2010.01)*
***H01M 10/0569** (2010.01)*

(52) Cooperative Patent Classification (CPC):
**H01M 4/134; H01M 4/40; H01M 10/052;**
**H01M 10/0568; H01M 10/0569;** Y02E 60/10

(86) International application number:
**PCT/JP2023/013219**

(87) International publication number:
**WO 2023/203987 (26.10.2023 Gazette 2023/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.04.2022 JP 2022070782**

(71) Applicant: **Panasonic Intellectual Property Management Co., Ltd.**
**Kadoma-shi, Osaka 571-0057 (JP)**

(72) Inventors:
- **TERADA, Shoshi**
  **Kadoma-shi, Osaka 571-0057 (JP)**
- **KANO, Akira**
  **Kadoma-shi, Osaka 571-0057 (JP)**

(74) Representative: **Novagraaf International SA**
**Chemin de l'Echo 3**
**1213 Onex, Geneva (CH)**

(54) **LITHIUM SECONDARY BATTERY**

(57) Disclosed is a lithium secondary battery (10) including a positive electrode (11), a negative electrode (12), and a non-aqueous electrolyte having lithium ion conductivity. In the negative electrode (12), lithium metal is deposited during charging, and the lithium metal is dissolved in the non-aqueous electrolyte during discharging. The non-aqueous electrolyte includes a solvent and a lithium salt. The solvent includes a non-fluorinated ether and a fluorinated cyclic monoether. The fluorinated cyclic monoether includes a cyclic structure having one ether bond. The lithium salt includes an anion of an oxalate complex.

*FIG. 1*

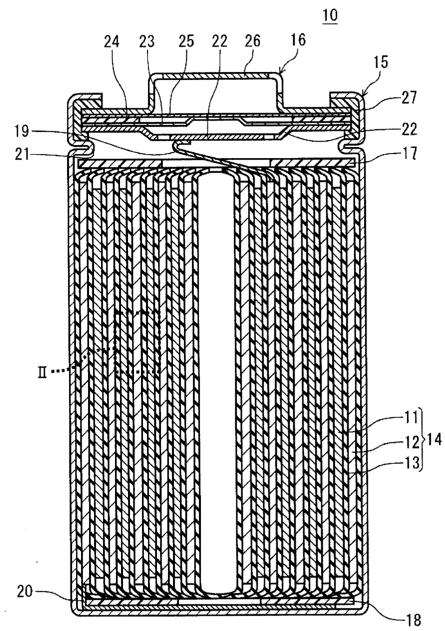


EP 4 513 606 A1

## Description

[Technical Field]

The present disclosure relates to a lithium secondary battery.

[Background Art]

In a lithium secondary battery, lithium metal is deposited in a negative electrode during charging. On the other hand, during discharging, the lithium metal is dissolved in a non-aqueous electrolyte. Conventionally, various lithium secondary batteries have been proposed.

Patent Literature 1 (Japanese Laid-Open Patent Publication No. 2013-211095) discloses a non-aqueous electrolytic solution for a secondary battery, including a lithium salt, a specific hydrofluoroether, a specific ether compound other than the hydrofluoroether, and a cyclic lactone.

Patent Literature 2 (WO 2020/202845) discloses "Anon-aqueous electrolyte secondary battery comprising: a positive electrode, a negative electrode, and a non-aqueous electrolyte having lithium ion conductivity, wherein a solvent in the non-aqueous electrolyte comprises a first ether compound represented by a general formula (1): $R1-(OCH_2CH_2)_n-OR2$ where R1 and R2 are each independently an alkyl group having a carbon number of 1 or more and 5 or less, and n is 1 to 3, and a second ether compound having a fluorination rate of 60% or more and represented by a general formula (2): $C_{a1}H_{b1}F_{c1}O_{d1}(CF_2OCH_2)C_{a2}H_{b2}F_{c2}O_{d2}$ where $a1 \geq 1$, $a2 \geq 0$, $b1 \leq 2a1$, $b2 \leq 2a2$, $c1 = (2a1 + 1) - b1$, $c2 = (2a2 + 1) - b2$, $d1 \geq 0$, and $d2 \geq 0$. The ratio of the total amount of the first ether compound and the second ether compound in the solvent is 80 vol% or more."

[Citation List]

[Patent Literatures]

Patent Literature 1: Japanese Laid-Open Patent Publication No. 2013-211095
Patent Literature 2 :WO 2020/202845

[Summary of Invention]

[Technical Problem]

At present, there is a need for a lithium secondary battery that exhibits a smaller reduction in characteristics (e.g., discharge capacity) even after repeated charging and discharging at high temperatures. Under such a circumstance, an object of the present disclosure is to provide a lithium secondary battery that exhibits a smaller reduction in characteristics (e.g., discharge capacity) even after repeated charging and discharging at high temperatures.

[Solution to Problem]

A first aspect of the present disclosure relates to a lithium secondary battery. The lithium secondary battery includes: a positive electrode; a negative electrode; and a non-aqueous electrolyte having lithium ion conductivity, wherein, in the negative electrode, lithium metal is deposited during charging, and the lithium metal is dissolved in the non-aqueous electrolyte during discharging, the non-aqueous electrolyte includes a solvent and a lithium salt, the solvent includes a non-fluorinated ether and a fluorinated cyclic monoether, the fluorinated cyclic monoether includes a cyclic structure having one ether bond, and the lithium salt includes an anion of an oxalate complex.

Matters recited in two or more claims freely selected from a plurality of claims recited in the appended claims can be combined where such combinations are possible.

[Advantageous Effects of Invention]

According to the present disclosure, it is possible to obtain a lithium secondary battery that exhibits a smaller reduction in discharge capacity even after repeated charging and discharging at high temperatures.

While the novel features of the invention are set forth particularly in the appended claims, the invention, both as to organization and content, will be better understood and appreciated, along with other objects and features thereof, from

the following detailed description taken in conjunction with the drawings.

[Brief Description of Drawings]

FIG. 1 shows a vertical cross-sectional view showing a lithium secondary battery according to an embodiment.
FIG. 2 is an enlarged cross-sectional view cut along the line II-II included in FIG. 1, in a fully discharged state of the lithium secondary battery.

[Description of Embodiments]

In the following, embodiments of the present disclosure will be described by way of examples. However, the present disclosure is not limited to the examples described below. Although examples of specific numerical values and materials may be given in the following description, other numerical values and materials may be used as long as the invention according to the present disclosure can be practiced. In the present specification, the expression "a numerical value A to a numerical value B" includes the numerical value A and the numerical value B, and can be read as "a numerical value A or more and a numerical value B or less." In the following description, when examples of the lower and upper limits of a numerical value related to a specific physical property, condition, or the like are given, any one of the given examples of the lower limit and any one of the given examples of the upper limit can be freely combined as long as the lower limit is not equal to or not greater than the upper limit.

(Lithium Secondary Battery)

A lithium secondary battery according to the present embodiment may be hereinafter referred to as a "lithium secondary battery (S)". The lithium secondary battery (S) includes a positive electrode, a negative electrode, and a non-aqueous electrolyte having lithium ion conductivity. In the negative electrode, lithium metal is deposited during charging, and the lithium metal is dissolved in the non-aqueous electrolyte during discharging. The non-aqueous electrolyte includes a solvent and a lithium salt. The solvent includes a non-fluorinated ether and a fluorinated cyclic monoether. The fluorinated cyclic monoether includes a cyclic structure having one ether bond. The lithium salt includes an anion of an oxalate complex.

In the negative electrode of a lithium secondary battery, lithium metal is dissolved during discharging, and the lithium metal is deposited during charging. Since the lithium metal is almost normally present in the negative electrode, side reactions between the lithium metal in the negative electrode and the non-aqueous electrolyte are likely to occur. In addition, a solid electrolyte interface (SEI) film derived from components included in the non-aqueous electrolyte is formed on the negative electrode during charging. In other words, deposition of lithium metal and formation of an SEI film proceed in parallel in the negative electrode during charging. Therefore, it is difficult to uniformly perform dissolution and deposition of lithium metal throughout the negative electrode during charging and discharging. Moreover, repeated charging and discharging will result in significant variations in dissolution and deposition of lithium metal. In such a state, lithium metal tends to be deposited in the form of dendrites.

Lithium metal deposited in the form of dendrites (hereinafter may be referred to as lithium dendrites) causes a reduction in discharge capacity. An increased specific surface area of the negative electrode due to production of lithium dendrites will result in significant side reactions, as well as an increased volume change during charging and discharging. When the negative electrode nonuniformly expands due to production of lithium dendrites during charging, it is difficult to reduce the stress resulting from the expansion of the negative electrode, causing cracking or breakage of the negative electrode. As a result, the discharge capacity is likely to be reduced. Thus, conventional lithium secondary batteries have the problem of a reduced discharge capacity due to charging and discharging. What is particularly problematic is that an SEI film tends to be formed less uniformly after repeated charging and discharging at high temperatures. Therefore, conventional lithium secondary batteries have the problem of a significant reduction in discharge capacity when repeatedly charged and discharged at high temperatures.

As a result of extensive studies under such a circumstance, the present inventors have newly found that the lithium secondary battery (S) having the above-described configuration exhibits a significantly small reduction in discharge capacity even after repeated charging and discharging at high temperatures. The present disclosure is based on this new knowledge.

When the non-aqueous electrolyte includes an anion of an oxalate complex, part of the oxalate complex anion is decomposed due to charging and discharging of the battery. The anion is considered to be decomposed at a higher potential than other additives and a solvent included in the non-aqueous electrolyte. The decomposition product of the anion is considered to be deposited on the surface of lithium metal, to form a thin uniform SEI film. The lithium metal is

mainly deposited between the film and the negative electrode current collector. As a result of the lithium metal being pressed by the film, the extension of a dendritic deposit is suppressed. However, at high temperatures, the decomposition rate of the oxalate complex anion is increased, so that an SEI film tends to be formed nonuniformly, resulting in a significant reduction in discharge capacity.

In contrast, for the lithium secondary battery (S), a fluorinated cyclic monoether having a relatively small viscosity is used. It seems that this results in more uniform formation of an SEI film, so that the reduction in discharge capacity was successfully suppressed.

Furthermore, it seems that the lithium secondary battery (S) has achieved a special synergistic effect by combining a non-fluorinated chain ether, a solvent containing a fluorinated cyclic monoether having a relatively small viscosity, and a specific lithium salt.

The sum of the proportion of the non-fluorinated ether and the proportion of the fluorinated cyclic monoether in the solvent may be 70 mol% or more, 90 mol% or more, or 95 mol% or more. When the aforementioned sum is high, the effects of the present disclosure can be easily increased. The solvent may be composed only of the non-fluorinated ether and the fluorinated cyclic monoether. When the solvent includes any other solvent other than the non-fluorinated ether and the fluorinated cyclic monoether, examples of the other solvent include a third solvent described below.

The ratio MF/MLi of the number of moles MF of the fluorinated cyclic monoether included in the non-aqueous electrolyte to the number of moles MLi of the lithium salt included in the non-aqueous electrolyte may be in the range described in (1) below.

(1) The ratio MF/MLi may be 0.25 or more, 1.0 or more, or 3.0 or more. The ratio MF/MLi may be 10 or less, 8.0 or less, or 5.0 or less. The ratio MF/MLi may be in the range from 0.25 to 10 (e.g., in the range from 1.0 to 5.0). By setting the ratio MF/MLi to 0.25 or more, the proportion of the fluorinated cyclic monoether having a lower viscosity is increased, so that the viscosity of the electrolytic solution is reduced, thus increasing the ion conductivity of the electrolytic solution. On the other hand, by setting the ratio MF/MLi to 10 or less, the reduction in ion conductivity due to the low lithium ion concentration in the electrolytic solution ca be suppressed. By setting the ratio MF/MLi in the above-described range, it is possible to achieve both a high lithium ion concentration and a low viscosity of the electrolytic solution, thus achieving a high ion conductivity in the electrolytic solution. As a result, the electrolytic solution of the lithium secondary battery exhibits excellent characteristics.

The ratio MF/MNF of the number of moles MF of the fluorinated cyclic monoether included in the non-aqueous electrolyte to the number of moles MNF of the non-fluorinated ether included in the non-aqueous electrolyte may be in the range described in (2) below.

(2) The ratio MF/MNF may be 0.1 or more, 0.5 or more, 1.0 or more, or 2.0 or more. The ratio MF/MNFi may be 10 or less, 5.0 or less, or 3.0 or less. The ratio MF/MNF may be in the range from 0.1 to 10 (e.g., in the range from 1.0 to 5.0). When the viscosity of the fluorinated cyclic monoether is lower than the viscosity of the non-fluorinated ether, the proportion of the fluorinated cyclic monoether having a lower viscosity is increased by setting the value of the MF/MNF to 0.1 or more. As a result, the viscosity of the electrolytic solution is reduced, thus increasing the ion conductivity of the electrolytic solution. On the other hand, the fluorinated cyclic monoether has a relatively weak interaction with lithium ions, so that dissociation of lithium ions tends to be reduced. Therefore, by setting the ratio MF/MNF to 10 or less, it is possible to suppress a reduction in the ion conductivity of the electrolytic solution. By setting the ratio MF/MNF in the above-described range, it is possible to achieve both a low viscosity of the electrolytic solution and high dissociation of lithium ions, thus achieving high ion conductivity in the electrolytic solution. As a result, the electrolytic solution of the lithium secondary battery exhibits excellent characteristics.

The lithium salt including the oxalate complex anion may have a concentration X in the range described in (3) below in the non-aqueous electrolyte.

(3) The concentration X may be 0.01 mol/L or more, 0.05 mol/L or more, or 0.1 mol/L or more. The concentration X may be 0.5 mol/L or less, 0.3 mol/L or less, or 0.2 mol/L or less. The concentration X may be in the range from 0.01 to 0.5 mol/L (e.g., in the range from 0.05 to 0.3 mol/L). This range allows film formation through decomposition of the oxalate complex anion to be performed appropriately, thus enabling uniform film formation. By setting the concentration X to 0.01 mol/L or more, the film formation can be performed appropriately. By setting the concentration X to 0.5 mol/L or less, it is possible to suppress a reduction in discharge capacity due to formation of a film having an excessively large thickness.

The fluorinated cyclic monoether may include a 5-membered ring including one ether bond, or a 6-membered ring including one ether bond. This configuration provides relatively high stability to oxidation-reduction, making it possible to achieve a low viscosity.

The above-described lithium salt including the oxalate complex anion may be lithium difluoro(oxalate)borate ($LiBF_2(C_2O_4)$).

The fluorinated cyclic monoether may be at least one selected from 3,3,4,4-tetrafluorotetrahydrofuran and 4-difluoromethyl tetrahydro-2H-pyran, or may be 3,3,4,4-tetrafluorotetrahydrofuran. The molecules of these compounds have a small volume, and thus have a low viscosity. Therefore, the use of these compounds can achieve a high effect due to a low viscosity, thus providing an electrolytic solution having excellent characteristics.

The lithium secondary battery (S) is also called a lithium metal secondary battery. For example, about 70% or more of the rated capacity of the lithium secondary battery (S) is developed through deposition and dissolution of lithium metal. The movement of electrons in the negative electrode during charging and during discharging is mainly caused by deposition and dissolution of lithium metal in the negative electrode. Specifically, 70 to 100% (e.g., 80 to 100% or 90 to 100%) of the movement of electrons (from another perspective, electric current) in the negative electrode during charging and during discharging is caused by deposition and dissolution of lithium metal. That is, the negative electrode of the lithium secondary battery (S) differs from a negative electrode in which the movement of electrons in the negative electrode during charging and during discharging is mainly caused by absorption and desorption of lithium ions by a negative electrode active material (e.g., graphite).

For a battery in which lithium metal is deposited in the negative electrode during charging, the open circuit voltage (OCV) of the negative electrode in a fully charged state is, for example, 70 mV or less, with respect to the lithium metal (dissolution/deposition potential of lithium). A fully charged state refers to a state in which, assuming that the rated capacity of battery is C, the battery is charged to a state of charge (SOC) of, for example, $0.98 \times C$ or more is reached. The open circuit voltage (OCV) of a negative electrode in a fully charged state may be measured by disassembling the battery in the fully charged state under an argon atmosphere to remove the negative electrode, and assembling a cell using lithium metal as a counter electrode. The non-aqueous electrolyte of the cell may have the same composition as that of the non-aqueous electrolyte included in the disassembled battery.

The following describes an exemplary configuration of the lithium secondary battery (S). Known constituent members may be used as constituent members other than the non-aqueous electrolyte.

(Non-Aqueous Electrolyte)

The non-aqueous electrolyte includes a solvent (more specifically, a non-aqueous solvent), and a lithium salt that dissolves in the solvent. The non-aqueous electrolyte in the form of liquid is prepared by dissolving the lithium salt in the non-aqueous solvent. As a result of the lithium salt being dissolved in the non-aqueous solvent, lithium ions and anions are produced. The non-aqueous electrolyte has lithium ion conductivity.

The non-aqueous electrolyte may be in the form of liquid or gel. The non-aqueous electrolyte in the form of gel includes a lithium salt, a solvent, and a matrix polymer. As the matrix polymer, a polymer material that gels by absorbing a solvent is used, for example. Examples of the polymer material include a fluorocarbon resin, an acrylic resin, and a polyether resin.

(Lithium Salt)

The lithium salt includes at least a lithium salt including an anion of an oxalate complex. The oxalate complex anion may contain fluorine. The oxalate complex anion may contain at least one of boron and phosphorus. The oxalate complex anion may contain boron (or phosphorus) and fluorine. The oxalate complex anion may be composed of boron (or phosphorus), fluorine, and $(C_2O_4)^{2-}$. When the oxalate complex anion containing fluorine is used, the SEI film contains inorganic components of LiF. Accordingly, the SEI film undergoes thinning due to its reduced solubility into the electrolytic solution, resulting in a film having a low resistance and good quality.

Examples of the oxalate complex anion include a bis(oxalate)borate anion, a difluoro(oxalate)borate anion ($BF_2(C_2O_4)^-$), $PF_4(C_2O_4)^-$, and $PF_2(C_2O_4)_2^-$. The lithium salt may include a lithium salt including an anion other than an anion of an oxalate complex. Examples of the anion constituting such a lithium salt include known anions used in non-aqueous electrolytes of lithium secondary batteries. Specific examples thereof include $BF_4^-$, $ClO_4^-$, $PF_6^-$, $CF_3SO_3^-$, $CF_3CO_2^-$, and an anion of an imide compound. Examples of the anion of an imide compound include $N(SO_2F)_2^-$ and $N(SO_2CF_3)_2^-$. The non-aqueous electrolyte may include one kind, or two or more kinds of anions in combination. In other words, the non-aqueous electrolyte may include one kind, or two or more kinds of lithium salts in combination.

When the lithium salt includes the oxalate complex anion, lithium metal tends to be more uniformly deposited in the form of fine particles. The non-aqueous electrolyte may include an anion of an oxalate complex, and an anion other than the oxalate complex anion. Examples of the anion other than the oxalate complex anion include at least one selected from $PF_6^-$ and an anion of an imide compound.

(Solvent)

As described above, the solvent (non-aqueous solvent) included in the non-aqueous electrolyte includes a non-fluorinated ether and a fluorinated cyclic monoether. Hereinafter, a fluorinated cyclic monoether may be referred to as a

"cyclic monoether (F)". Also, hereinafter, a non-fluorinated ether may be referred to as an "ether (NF)", a chain ether that is a non-fluorinated ether may be referred to as a "chain ether (NF)", and a cyclic ether that is a non-fluorinated ether may be referred to as a "cyclic ether (NF)". These will be described below.

(Cyclic Monoether (F))

The cyclic monoether (F) (fluorinated cyclic monoether) includes a fluorine atom and a cyclic structure. The cyclic monoether (F) has only one ether bond (- O -) in the molecule, and the ether bond is present in the cyclic structure. The non-aqueous electrolyte may include only one compound that is a cyclic monoether (F), or may include a plurality of kinds of compounds that are cyclic monoethers (F). The cyclic structure of the cyclic monoether (F) may or may not include a double bond. The cyclic structure may or may not have aromaticity. The cyclic monoether (F) has a relatively low viscosity. In a preferred example, the viscosity of the cyclic monoether (F) is lower than the viscosities of other compounds constituting the solvent.

The cyclic structure of the cyclic monoether (F) may be a 5- to 10-membered ring, a 5- to 8-membered ring, or 5- or 6-membered ring. Examples of the 5-membered ring include cyclic structures such as furan, dihydrofuran, and tetrahydrofuran. Examples of the 6-membered ring include cyclic structures such as pyran, dihydropyran, and tetrahydropyran.

Examples of the cyclic monoether (F) include a compound having a structure in which the hydrogen atoms included in a predetermined ether are replaced with fluorine atoms. Examples of the ether before fluorination include tetrahydrofuran, alkyl tetrahydrofuran (e.g., 2-methyltetrahydrofuran), propylene oxide, 1,2-butylene oxide, furan, alkyl furan (e.g., 2-methylfuran), tetrahydropyran, and alkyl tetrahydropyran. Examples of the ether before fluorination include a compound having a structure in which the hydrogen atoms of the above-described 5- or 6-membered ring are replaced with fluorine atoms or a fluorinated alkyl group. Examples of the alkyl group included in the aforementioned compound include a methyl group and an ethyl group.

The hydrogen atoms replaced with fluorine atoms may be hydrogen atoms directly bound to the cyclic structure, or may be hydrogen atoms bound to an atomic group (e.g., an alkyl group) bound to the cyclic structure.

A fluorination rate (%) is represented by the proportion of the hydrogen atoms replaced with fluorine atoms. When N1 is the number of fluorine atoms in the cyclic monoether (F), and N0 is the number of hydrogen atoms included in the molecule when all the fluorine atoms in the cyclic monoether (F) are replaced with hydrogen atoms, the fluorination rate is represented by the following expression:

$$\text{Fluorination rate (\%)} = 100 \times \text{N1/N0}$$

For example, in the case of 3,3,4,4-tetrafluorotetrahydrofuran, the number N1 of fluorine atoms in the molecule is equal to 4. The number N0 of hydrogen atoms included in the molecule when all the fluorine atoms in the molecule are replaced with hydrogen atoms is equal to 8. Accordingly, the fluorination rate is 50%.

The fluorination rate is not particularly limited as long as the effects of the present disclosure can be achieved. The fluorination rate may be 10% or more, 20% or more, 30% or more, 40% or more, or 50% or more, and may be 80% or less, or 60% or less. The fluorination rate may be in the range from 10 to 80% (e.g., in the range from 30 to 80% or 30 to 60%).

An alkyl group or a fluorinated alkyl group may be bound to the cyclic structure of the cyclic monoether (F). The carbon number of the alkyl group or the fluorinated alkyl group may be, for example, 1 or more and 6 or less, and may be 1 or more and 4 or less, 1 or more and 3 or less, or 1 or 2.

The cyclic monoether (F) may be a cyclic ether having a structure in which at least some of the hydrogen atoms of tetrahydrofuran are replaced with fluorine atoms, or may be cyclic ether having a structure in which at least some of the hydrogen atoms of tetrahydrofuran to which an alkyl group is bound are replaced with fluorine atoms. An example of the cyclic monoether (F) in such a case is represented by the following formula (i):

[Chem. 1]

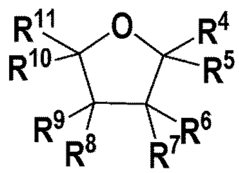

(i)

where $R^4$ to $R^{11}$ each independently represent a hydrogen atom, a fluorine atom, an alkyl group, or a fluorinated alkyl group, and at least one of $R^4$ to $R^{11}$ is a fluorine atom or a fluorinated alkyl group.

The carbon number of the alkyl group or the fluorinated alkyl group represented by $R^4$ to $R^{11}$ is, for example, 1 or more and 6 or less, and may be 1 or more and 4 or less, 1 or more and 3 or less, or 1 or 2. The alkyl group or the fluorinated alkyl group may be branched, but is preferably linear. The fluorination rate may be in the above-described range. Examples of the cyclic monoether (F) represented by the formula (i) include 3,3,4,4-tetrafluorotetrahydrofuran in which $R^6$ to $R^9$ are fluorine atoms.

The cyclic monoether (F) may be a cyclic ether having a structure in which at least some of the hydrogen atoms of tetrahydropyran are replaced with fluorine atoms, or may be a cyclic ether having a structure in which at least some of the hydrogen atoms of tetrahydrofuran to which an alkyl group is bound are replaced with fluorine atoms. The description regarding the formula (i) can be applied to the alkyl group and the fluorinated alkyl group of the aforementioned cyclic ethers. The fluorination rate may be in the above-described range.

(Non-Fluorinated Ether)

The non-fluorinated ether (ether (NF)) is an ether that is not fluorinated. In other words, the non-fluorinated ether is an ether including no fluorine atom. The non-fluorinated ether includes one or more ether bonds. The ether bond or ether bonds may be included in a chain structure and/or a cyclic structure. The non-fluorinated ether may be a chain ether or a cyclic ether. Examples of the chain ether (NF) that is a non-fluorinated ether and the cyclic ether (NF) that is a non-fluorinated ether will be described below.

(Chain Ether (NF))

The chain ether (NF) (non-fluorinated chain ether) is a compound having an ether bond in a chain portion thereof. The chain ether (NF) may be a chain compound having an ether bond. The chain ether (NF) includes a chain portion having an ether bond, and a cyclic structure bound to the chain portion and including no ether bond. The chain ether (NF) may have one, or two or more ether bonds (-O-) in the molecule. In the molecule, the number of ether bonds is, for example, 5 or less, and may be 4 or less, or 3 or less. From the viewpoint of the ease of securing high affinity for lithium ions, the chain ether (NF) may have 2 or more (e.g., 2 or more and 5 or less, or two or less and 4 or less) ether bonds.

The chain ether (NF) may include at least one selected from compounds represented by the following formula (ii):

[Chem. 2]

$$R^1 \!-\!\left(O-R^3\right)_n\!-O-R^2 \qquad \text{(ii)}$$

where $R^1$ and $R^2$ are each independently an alkyl group having a carbon number of 1 or more and 5 or less, $R^3$ is an alkylene group having a carbon number of 1 or more and 5 or less, and n is an integer of 0 or more and 4 or less.

The carbon number of the alkylene group represented by $R^3$ may be 2 or more and 4 or less, or 2 or 3. Note that when n is 2 or more, the formula (ii) includes two or more units represented by -O-$R^3$-. In this case, $R^3$ may be the same in at least two units, or $R^3$ may be different in all units.

Among the compounds represented by the formula (ii), compounds represented by the following formula (iia) are preferred. In other words, the chain ether (NF) may include at least one selected from compounds represented by the formula (iia). The formula (iia) corresponds to the formula (ii) where the alkylene group $R^3$ is an ethylene group.

[Chem. 3]

$$R^1 \!-\!\left(O-CH_2-CH_2\right)_n\!-O-R^2 \qquad \text{(iia)}$$

where $R^1$, $R^2$, and n are the same as those in the formula (ii).

In each of the formulas (ii) and (iia), the carbon numbers of the alkyl groups respectively represented by $R^1$ and $R^2$ are, for example, 1 or more and 5 or less, and may be 1 or more and 3 or less, or 1 or 2. $R^1$ and $R^2$ may be the same or different.

n may be an integer of 0 or more and 3 or less. From the viewpoint of the ease of securing high affinity for lithium ions, n is preferably an integer of 1 or more and 3 or less, and may be 1 or 2.

The use of the compound of the formula (ii) or the formula (iia) (especially the compound of the formula (iia)) facilitates solvation of lithium ions. Furthermore, the use of those compounds in combination with the cyclic monoether (F)

can suppress side reactions involving the solvent both in the positive electrode and the negative electrode, thus allowing charge-discharge reactions to proceed. Accordingly, a reduction in discharge capacity is easily suppressed.

Examples of the chain ether (NF) include diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxy benzene, 1,1-dimethoxymethane, and 1,1-diethoxyethane. The chain ether (NF) preferably includes at least a chain ether having two or more ether bonds. Examples of such a chain ether include 1,2-dimethoxyethane (DME), 1,2-diethoxyethane, 1,2-dibutoxyethane, diethylene glycol dimethyl ether, diethylene glycol diethyl ether, diethylene glycol ethyl methyl ether, diethylene glycol dibutyl ether, triethylene glycol dimethyl ether, triethylene glycol diethyl ether, triethylene glycol ethyl methyl ether, tetraethylene glycol dimethyl ether, tetraethylene glycol diethyl ether, and tetraethylene glycol ethyl methyl ether.

Specific examples of the chain ether (NF) include the following compounds:

$CH_3$-O-$CH_2CH_2$-O-$CH_3$

$CH_3CH_2$-O-$CH_2CH_2$-O-$CH_3$

$CH_3CH_2$-O-$CH_2CH_2$-O-$CH_3$

$CH_3CH_2$-O-$CH_2CH_2$-O-$CH_2CH_3$

$CH_3$-O-$CH_2CH_2CH_2CH_2$-O-$CH_3$

$CH_3CH_2$-O-$CH(CH_3)CH_2$-O-$CH_2CH_3$

$CH_3CH_2$-O-$(CH_2CH_2$-O)3-$CH_2CH_3$

(Cyclic Ether (NF))

The cyclic ether (NF) (non-fluorinated cyclic monoether) has an ether bond (-O-) in at least the cyclic structure. The non-aqueous electrolyte may include only one compound that is a cyclic ether (NF), or may include a plurality of kinds of compounds that are cyclic ethers (NF). The cyclic structure of the cyclic ether (NF) may or may not include a double bond. The cyclic structure may or may not have aromaticity. A chain structure including an ether bond may be bound to the cyclic structure.

Examples of the cyclic ether (NF) include compounds having structures in which the fluorine atoms of the compounds shown as examples for the above-described cyclic monoether (F) (fluorinated cyclic monoether) are replaced with hydrogen atoms. Examples of the cyclic ether (NF) include 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineol, and crown ether.

As the non-fluorinated ether (NF) and the fluorinated cyclic monoether (F), compounds that can be used as solvents of non-aqueous electrolytes of lithium secondary batteries are used. The non-fluorinated ether (NF) may be a compound composed of carbon, oxygen, and hydrogen. The fluorinated cyclic monoether (F) may be compound composed of carbon, oxygen, hydrogen, and fluorine. These oxygen atoms may be included only in an ether bond.

The non-aqueous electrolyte may include only one kind, or two or more kinds of non-fluorinated ethers (NF) in combination. The non-aqueous electrolyte may include only one kind, or two or more kinds of fluorinated cyclic monoethers (F).

The molecular weight of the non-fluorine ether (NF) may be 60 or more, 70 or more, or 80 or more, and 300 or less, 200 or less, or 100 or less. The aforementioned molecular weight may be in the range from 60 to 300 (e.g., in the range from 70 to 200).

The molecular weight of the fluorinated cyclic monoether (F) may be 90 or more, 120 or more, or 140 or more, and 300 or less, 250 or less, or 200 or less. The aforementioned molecular weight may be in the range from 90 to 300 (e.g., in the range from 120 to 200).

(Ratio of Each Solvent)

The proportion of the fluorinated cyclic monoether (F) in each of the solvents may be 5 mol% or more, or 30 mol% or more, and 90 mol% or less, or 70 mol% or less. The proportion of the non-fluorinated ether (NF) in the solvent may be 5 mol% or more, or 20 mol% or more, and 80 mol% or less, or 60 mol% or less. The proportion of the chain ether (NF) and the

proportion of the cyclic ether (NF) in the non-fluorinated ether (NF) are not particularly limited. The non-fluorinated ether (NF) may be composed only of the chain ether (NF) or the cyclic ether (NF), or may be composed of the chain ether (NF) and the cyclic ether (NF).

(Others)

The solvent may include a small amount of another solvent (third solvent) other than the fluorinated cyclic monoether (F) and the non-fluorinated ether (NF). Examples of such a third solvent include a fluorinated chain ether and a fluorinated cyclic polyether (e.g., a fluorinated cyclic diether). Examples of the fluorinated chain ether include a compound having a structure in which at least some of the hydrogen atoms of the non-fluorinated chain ether (NF) are replaced with fluorine atoms. Additional examples of the third solvent include esters, nitriles, amides, and halogen-substituted products thereof. The non-aqueous electrolyte may include only one kind, or two or more kinds of third solvents. A halogen-substituted product has a structure in which at least one hydrogen element is replaced with a halogen element. Examples of the halogen element include at least one selected from elemental fluorine, elemental chlorine, elemental bromine, elemental iodine, and the like. The solvent may be composed only of an ether compound, or may be composed of an ether compound and a compound other than an ether compound.

Examples of the esters include carbonic acid esters and carboxylic acid esters. Cyclic carbonic acid esters include ethylene carbonate, propylene carbonate, butylene carbonate, and fluoroethylene carbonate. Chain carbonic acid esters include dimethyl carbonate, ethyl methyl carbonate, diethyl carbonate, methyl propyl carbonate, ethyl propyl carbonate, and methyl isopropyl carbonate. Cyclic carboxylic acid esters include $\gamma$-butyrolactone and $\gamma$-valerolactone. Chain carboxylic acid esters include methyl acetate, ethyl acetate, propyl acetate, methyl propionate, ethyl propionate, and methyl fluoropropionate.

The non-aqueous electrolyte may include an additive. The additive may form a film on the negative electrode. As a result of a film derived from the additive being formed on the negative electrode, production of dendrites is even more likely to be suppressed. Examples of the additive include vinylene carbonate and vinyl ethylene carbonate. The amount of the additive in the non-aqueous electrolyte may be, for example, 5 mass% or less.

(Positive Electrode)

The positive electrode includes, for example, a positive electrode current collector, and a positive electrode mixture layer formed on a surface of the positive electrode current collector. The positive electrode current collector may have the shape of a sheet (e.g., a foil or a film), or may be porous. The positive electrode mixture layer may be formed on a pair of principal surfaces of a sheet-shaped positive electrode current collector, or may be formed on one of the principal surfaces. The positive electrode mixture layer may be formed so as to be filled into a mesh-like positive electrode current collector.

Examples of the material of the positive electrode current collector include metal materials, including Al, Ti, and Fe. The metal material may be Al, an Al alloy, Ti, a Ti alloy, an Fe alloy, and the like. The Fe alloy may be stainless steels.

The positive electrode mixture layer includes a positive electrode active material. The positive electrode mixture layer may include, in addition to the positive electrode active material, at least one selected from the group consisting of a binder, a conductive material, a thickener, and an additive. If necessary, a conductive carbonaceous material may be disposed between the positive electrode current collector and the positive electrode mixture layer.

As the positive electrode active material, a material that electrochemically absorbs and desorbs lithium ions is used. Examples of such a material include at least one selected from the group consisting of a lithium-containing transition metal oxide, a transition metal fluoride, a polyanion, a fluorinated polyanion, and a transition metal sulfide. In terms of a high average discharge voltage and a cost advantage, the positive electrode active material may be a lithium-containing transition metal oxide.

Transition metal elements that can be included in the lithium-containing transition metal oxide include Sc, Ti, V, Cr, Mn, Fe, Co, Ni, Cu, Y, Zr, and W. The lithium-containing transition metal oxide may include one kind, or two or more kinds of transition metal elements. The transition metal element may be at least one selected from the group consisting of Co, Ni, and Mn. If necessary, the lithium-containing transition metal oxide may include one kind, or two or more kinds of typical metal elements. Examples of the typical metal element include Mg, Al, Ca, Zn, Ga, Ge, Sn, Sb, Pb, and Bi. The typical metal element may be Al or the like.

Examples of the binder include a fluorocarbon resin, polyacrylonitrile, a polyimide resin, an acrylic resin, a polyolefin resin, and a rubber-like polymer. Examples of the fluorocarbon resin include polytetrafluoroethylene and polyvinylidene fluoride.

Examples of the conductive material include a conductive carbonaceous material. Examples of the conductive carbonaceous material include carbon black, carbon nanotubes, and graphite. Examples of the carbon black include acetylene black and Ketjen black.

Examples of the thickener include cellulose derivatives such as cellulose ether. Cellulose derivatives include carboxymethyl cellulose (CMC) and modified forms thereof, and methylcellulose. The modified forms of CMC also include salts of CMC. The salts include alkali metal salts (e.g., a sodium salt) and ammonium salts.

Examples of the carbonaceous material disposed between the positive electrode current collector and the positive electrode mixture layer include at least one selected from the conductive carbonaceous materials shown as examples of the conductive material.

The positive electrode can be obtained, for example, by applying onto or filling into, the positive electrode current collector, a slurry including the components of the positive electrode mixture layer and a dispersing medium, and drying and compressing the resulting coating film. If necessary, a conductive carbonaceous material may be applied to a surface of the positive electrode current collector. Examples of the dispersing medium include at least one selected from the group consisting of water and organic mediums (e.g., N-methyl-2-pyrrolidone).

(Negative Electrode)

The negative electrode includes a negative electrode current collector. Usually, the negative electrode current collector is formed by a conductive sheet. The conductive sheet may be formed of a conductive material other than lithium metal and a lithium alloy. The conductive material may be a metal material such as metal and an alloy. The metal material may be a material that does not react with lithium. More specifically, the metal material may be a material that forms neither an alloy nor an intermetallic compound with lithium. Such a metal material is, for example, copper, nickel, iron, and alloys and the like including these metal elements. The alloy may be a copper alloy, stainless steel, and the like. From the viewpoint of the ease of securing a high capacity and high charge-discharge efficiency due to high conductivity, the metal material may include at least one of copper and a copper alloy. The conductive sheet may include one, or two or more of these conductive materials.

A foil, a film, and the like can be used as the conductive sheet. The conductive sheet may be porous. From the viewpoint of the ease of securing high conductivity, the conductive sheet may be a metal foil, or a metal foil including copper. Such a metal foil may be a copper foil or a copper alloy foil.

From the viewpoint of the ease of securing a high volume energy density, the negative electrode may include only the negative electrode current collector in a fully discharged state of the lithium secondary battery (S). That is, the lithium secondary battery (S) may not include the negative electrode active material layer. From the viewpoint of the ease of securing high charge-discharge efficiency, the negative electrode may include, in the fully discharged state, a negative electrode current collector, and a negative electrode active material layer disposed on a surface of the negative electrode current collector. At the time of assembling the battery, only the negative electrode current collector may be used as the negative electrode, or a negative electrode including a negative electrode active material layer and a negative electrode current collector may be used.

Examples of the negative electrode active material included in the negative electrode active material layer include metallic lithium, a lithium alloy, and a material that reversibly absorbs and desorbs lithium ions. As the negative electrode active material, a negative electrode active material that can be used in lithium ion batteries may be used. Examples of the lithium alloy include a lithium-aluminum alloy, a lithium-zinc alloy, a lithium-magnesium alloy, a lithium-silver alloy, and a lithium-gold alloy. Examples of the material that reversibly absorbs and desorbs lithium ions include a carbon material and an alloy-based material. Examples of the carbon material include a graphite material, soft carbon, hard carbon, and amorphous carbon. Examples of the alloy-based material include a silicon-containing material and a tin-containing material. Examples of the alloy-based material include a silicon simple substance, a silicon alloy, a silicon compound, a tin simple substance, a tin alloy, and a tin compound. Examples of each of the silicon compound and the tin compound include oxides and nitrides thereof. The negative electrode active material layer may include one kind, or two or more kinds of negative electrode active materials in combination.

The negative electrode active material layer may be formed by depositing the negative electrode active material on a surface of the negative electrode current collector by using a gas phase method such as electrodeposition or vapor deposition. Also, the negative electrode active material layer may be formed by applying, to a surface of the negative electrode current collector, a negative electrode mixture including a negative electrode active material, a binder, and optionally other components. Examples of the other components include a conductive material, a thickener, and an additive.

The thickness of the negative electrode active material layer is not particularly limited, and is, for example, 30 $\mu$m or more and 300 $\mu$m or less, in a fully discharged state of the lithium secondary battery (S). Note that the thickness of the negative electrode current collector is, for example, 5 $\mu$m or more and 20 $\mu$m or less.

In the present disclosure, a fully discharged state of a lithium metal secondary battery refers to a state in which the battery is discharged to a state of charge (SOC) of $0.05 \times C$ or less when C represents the rated capacity of the battery. For example, the fully discharged state refers to a state in which the battery is discharged to a lower limit voltage at a constant current of 0.05C. The lower limit voltage is 2.5 V, for example.

The negative electrode may further include a protection layer. The protection layer may be formed on a surface of the negative electrode current collector, or may be formed on a surface of a negative electrode active material layer when the negative electrode includes the negative electrode active material layer. The protection layer has the effect of making the electrode surface reaction more uniform, so that lithium metal is likely to be more uniformly deposited in the negative electrode. The protection layer is formed of, for example, a material (an organic material, an inorganic material) that does not inhibit lithium ion conductivity. Examples of the organic material include a polymer having lithium ion conductivity. Examples of such a polymer include polyethylene oxide and polymethyl methacrylate. Examples of the inorganic material include ceramics and a solid electrolyte. The protection layer may include one, or two or more of these materials.

(Separator)

The lithium secondary battery may include a separator interposed between the positive electrode and the negative electrode. For the separator, a porous sheet having ion permeability and insulating properties is used. Examples of the porous sheet include a microporous film, a woven fabric, and a non-woven fabric. The material of the separator may be a polymer material. Examples of the polymer material include an olefin resin, a polyamide resin, and cellulose. Examples of the olefin resin include polyethylene, polypropylene, and a copolymer of ethylene and propylene. If necessary, the separator may include an additive. Examples of the additive include an inorganic filler.

The separator may include a plurality of layers that are different in at least one of configuration and composition. Such a separator may be, for example, a laminate of a polyethylene microporous film and a polypropylene microporous film, or a laminate of a non-woven fabric including cellulose fibers and a non-woven fabric including thermoplastic resin fibers.

(Others)

Examples of the structure of the lithium secondary battery include a structure in which an electrode group formed by winding a positive electrode and a negative electrode with a separator interposed therebetween, and a non-aqueous electrolyte are accommodated in an exterior case. In such a structure, an electrode group having another configuration, such as a stacked electrode group formed by stacking a positive electrode and a negative electrode with a separator interposed therebetween, may be used as the electrode group. The lithium secondary battery may have any configuration, including, for example, a cylindrical configuration, a prismatic configuration, a coin configuration, a button configuration, and a laminated configuration.

FIG. 1 shows a vertical cross-sectional view of a lithium secondary battery according to an embodiment. FIG. 2 shows an enlarged cross-sectional view cut along the line II included in FIG. 1, in a fully discharged state of the lithium secondary battery.

A lithium secondary battery 10 is a cylindrical battery including a cylindrical battery case, a wound electrode group 14, and a non-aqueous electrolyte (not shown). Inside the battery case, the electrode group 14 and the non-aqueous electrolyte are accommodated. The battery case is composed of a case body 15, which is a bottomed cylindrical container made of metal, and a sealing body 16 that seals the opening of the case body 15. A gasket 27 is disposed between the case body 15 and the sealing body 16, whereby the hermeticity of the battery case is ensured. Inside the case body 15, insulating plates 17 and 18 are disposed at one end and the other end, respectively, of the wound electrode group 14.

The case body 15 has a step portion 21 formed, for example by pressing part of a side wall of the case body 15 from outside. The step portion 21 may be formed in an annular shape on the side wall of the case body 15 along the circumferential direction of the case body 15. In this case, the sealing body 16 is supported by a surface of the step portion 21 that is located on the opening side.

The sealing body 16 includes a filter 22, a lower valve body 23, an insulating member 24, an upper valve body 25, and a cap 26. In the sealing body 16, these members are stacked in this order. The sealing body 16 is mounted to the opening of the case body 15 such that the cap 26 is located outward of the case body 15, and the filter 22 is located inward of the case body 15. Each of the members constituting the sealing body 16 has, for example, a disk shape or a ring shape. The members other than the insulating member 24 are electrically connected to each other.

The electrode group 14 includes a positive electrode 11, a negative electrode 12, and a separator 13. All of the positive electrode 11, the negative electrode 12, and the separator 13 are band shaped. The positive electrode 11 and the negative electrode 12 are spirally wound with the separator 13 interposed therebetween such that the width direction of the band-shaped positive electrode 11 and negative electrode 12 is parallel to the winding axis. On a cross section perpendicular to the winding axis of the electrode group 14, the positive electrode 11 and the negative electrode 12 are alternately stacked in the radial direction of the electrode group 14, with the separator 13 interposed between these electrodes.

The positive electrode 11 is electrically connected to the cap 26, also serving as a positive electrode terminal, via a positive electrode lead 19. One end of the positive electrode lead 19 is electrically connected to the band-shaped positive

electrode 11. The positive electrode lead 19 extending from the positive electrode 11 extends to the filter 22 through a through hole (not shown) formed in the insulating plate 17. The other end of the positive electrode lead 19 is welded to a surface of the filter 22 that is located on the electrode group 14 side.

The negative electrode 12 is electrically connected to the case body 15, also serving as a negative electrode terminal, via a negative electrode lead 20. One end of the negative electrode lead 20 is electrically connected to the band-shaped negative electrode 12. The other end of the negative electrode lead 20 is welded to an inner bottom surface of the case body 15.

As shown in FIG. 2, the positive electrode 11 includes a positive electrode current collector 30, and positive electrode mixture layers 31 disposed on both surfaces of the positive electrode current collector 30. The negative electrode 12 includes a negative electrode current collector 32. In the negative electrode 12 of the lithium secondary battery 10, lithium metal is deposited due to charging. On the other hand, the deposited lithium metal is dissolved in the non-aqueous electrolyte due to discharging.

(Supplementary Note)

The above-described embodiment discloses the following techniques.

(Technique 1)

A lithium secondary battery including:

a positive electrode; a negative electrode; and a non-aqueous electrolyte having lithium ion conductivity, wherein, in the negative electrode, lithium metal is deposited during charging, and the lithium metal is dissolved in the non-aqueous electrolyte during discharging,
the non-aqueous electrolyte includes a solvent and a lithium salt,
the solvent includes a non-fluorinated ether and a fluorinated cyclic monoether,
the fluorinated cyclic monoether includes a cyclic structure having one ether bond, and
the lithium salt includes an anion of an oxalate complex.

(Technique 2)

The lithium secondary battery according to technique 1, wherein a sum of a proportion of the non-fluorinated ether and a proportion of the fluorinated cyclic monoether in the solvent is 95 mol% or more.

(Technique 3)

The lithium secondary battery according to technique 1 or 2, wherein a ratio MF/MLi of a number of moles MF of the fluorinated cyclic monoether included in the non-aqueous electrolyte to a number of moles MLi of the lithium salt included in the non-aqueous electrolyte is in a range from 0.25 to 10.

(Technique 4)

The lithium secondary battery according to any one of techniques 1 to 3, wherein a ratio MF/MNF of a number of moles MF of the fluorinated cyclic monoether included in the non-aqueous electrolyte to a number of moles MNF of the non-fluorinated ether included in the non-aqueous electrolyte is in a range from 0.1 to 10.

(Technique 5)

The lithium secondary battery according to any one of techniques 1 to 4, wherein the lithium salt including the oxalate complex anion has a concentration in a range from 0.01 to 0.5 mol/L in the non-aqueous electrolyte.

(Technique 6)

The lithium secondary battery according to any one of techniques 1 to 5, wherein the fluorinated cyclic monoether includes a 5-membered ring including one ether bond, or a 6-membered ring including one ether bond.

(Technique 7)

The lithium secondary battery according to any one of techniques 1 to 6, wherein the lithium salt including the oxalate complex anion is lithium difluoro(oxalate)borate.

(Technique 8)

The lithium secondary battery according to any one of techniques 1 to 7, wherein the fluorinated cyclic monoether is 3,3,4,4-tetrafluorotetrahydrofuran.

[Examples]

Hereinafter, the present disclosure will be described specifically with reference to examples. However, the present disclosure is not limited to the following examples. In the examples, a plurality of lithium secondary batteries were produced according to the following procedure, and evaluated.

(Battery A1)

According to the following procedure, a battery A1 (lithium secondary battery) having the structure shown in FIG. 1 was produced.

(1) Production of Positive Electrode 11

A positive electrode active material, acetylene black (conductive material), and polyvinylidene fluoride (binder) were mixed at a mass ratio of 95:2.5:2.5, to obtain a mixture. To the obtained mixture, an appropriate amount of N-methyl-2-pyrrolidone (dispersing medium) was added and stirred, to prepare a positive electrode mixture slurry. As the positive electrode active material, a lithium-containing transition metal oxide including Ni, Co, and Al was used.

The positive electrode mixture slurry was applied to both surfaces of an aluminum foil (positive electrode current collector 30), and dried to obtain a dry material. Next, the dry material was compressed in the thickness direction using a roller to, obtain a laminate. The obtained laminate was cut into a predetermined electrode size, to produce a positive electrode 11 including a positive electrode current collector 30, and positive electrode mixture layers 31 formed on both surfaces of the positive electrode current collector 30. Here, the positive electrode 11 has a region provided with an exposed portion that had no positive electrode mixture layer 31 and from which the positive electrode current collector 30 was exposed. To the exposed portion of the positive electrode current collector 30, one end of a n positive electrode lead 19 made of aluminum was attached by welding.

(2) Production of Negative Electrode 12

An electrolytic copper foil having a thickness of 10 $\mu$m was cut into a predetermined electrode size, to form a negative electrode current collector 32. The negative electrode current collector 32 was used as the negative electrode 12 to produce a battery. One end of a negative electrode lead 20 made of nickel was attached to the negative electrode current collector 32 by welding.

(3) Preparation of Non-Aqueous Electrolyte

A solvent was prepared by mixing 3,3,4,4-tetrafluorotetrahydrofuran (F-THF) serving as a cyclic fluorinated ether (F) and 1,2-dimethoxyethane (DME) serving as a non-fluorinated chain ether (NF). These materials were mixed such that the ratio MF/MNF of the number of moles MF of the fluorinated cyclic monoether included in a non-aqueous electrolyte to the number of moles MNF of the non-fluorinated ether included in the non-aqueous electrolyte had the value shown in Table 1. In the obtained solvent, lithium hexafluorophosphate ($LiPF_6$) serving as a lithium salt, and lithium difluoro(oxalate) borate(LiFOB) serving as a lithium salt were dissolved to prepare a non-aqueous electrolyte. As this time, LiFOB and $LiPF_6$ were dissolved in the solvent such that the concentrations thereof were as shown in Table 1.

(4) Production of Battery

The positive electrode 11 obtained in (1) above, the negative electrode 12 obtained in (2) above, and a separator 13 were wound in an inert gas atmosphere, to produce an electrode group 14. The positive electrode 11, the negative electrode 12, and the separator 13 were wound such that the separator 13 was disposed between the positive electrode 11

and the negative electrode 12. As the separator 13, a microporous film made of polyethylene was used. The obtained electrode group 14 was accommodated in a bag-shaped exterior member. Next, the non-aqueous electrolyte obtained in (3) above was injected into the exterior member, and thereafter the exterior member was sealed. In this manner, a battery A1 was produced. The exterior member was formed of a laminate sheet including an aluminum layer.

(Other Batteries)

A plurality of different non-aqueous electrolytes were prepared in the same manner as the preparation of the non-aqueous electrolyte of the battery A1, except that the type and the ratio of the solvents used for the non-aqueous electrolyte, and the type and the ratio of lithium salts were changed as shown in Table 1. Note that "Others (X)" in Table 1 refer to solvents other than the fluorinated cyclic monoether (F) and the non-fluorinated ether (NF). A plurality of batteries were produced in the same manner as the production method of the battery A1 except that the prepared non-aqueous electrolytes were used.

(1) Charge-Discharge Cycle Test at 25°C (T1)

The plurality of produced lithium secondary batteries were subjected to a charge-discharge test according to the following procedure, and the cycle characteristics thereof were evaluated. First, in a constant-temperature bath at 25°C, each of the lithium secondary batteries was charged under the following conditions, followed by a rest period of 20 minutes, and discharged under the following conditions.

(Charging)

Constant-current charging was performed at a current of 0.1 It until the battery voltage reached 4.3 V, and thereafter constant-voltage charging was performed at a voltage of 4.3 V until the current value reached 0.01 It. Here, "It" is a current value represented by It (A) = Rated capacity (Ah)/1.0 (h).

(Discharging)

Constant-current discharging was performed at a current of 0.1 It until the battery voltage reached 2.5 V
With the above-described charging and discharging taken as one cycle, a charge-discharge test of 50 cycles was performed. The discharge capacity at the first cycle was measured as the initial discharge capacity $C_0$. The discharge capacity $C_1$ at the 50th cycle was measured. Then, the capacity retention rate (%) was determined from the following expression:

$$\text{Capacity Retention Rate (\%)} = 100 \times C_1/C_0$$

(2) Charge-Discharge Cycle Test at 45°C (T2)

The plurality of produced lithium secondary batteries were subjected to charge-discharge cycle test (T2) in the same manner as in the above-described charge-discharge cycle test (T1), except that the above-described charging and discharging were performed in a constant-temperature bath at 45°C instead of the constant-temperature bath at 25°C. Then, the capacity retention rates (%) were determined in the same manner as described above.
Some of the preparation conditions of the non-aqueous electrolytes, and the evaluation results are shown in Table 1. A higher capacity retention indicates less degradation and is preferred. Batteries A1 to A10 are lithium secondary batteries (S), and the other batteries are batteries of comparative examples.
"Molar ratio MF/MNF/MX" in Table 1 indicates the molar ratio of the compounds constituting the solvents, and MF/MNF/MX = "Number of moles of fluorinated cyclic monoether (F)"/"Number of moles of non-fluorinated ether (NF)"/"Number of moles of Others (X)". In Table 1, "0.05/1.0" in the column of the concentration of the lithium salt of the experimental example EA1 indicates that the concentration of LiFOB is 0.05 mol/L, and the concentration of $LiPF_6$ is 1.0 mol/L (the same applies to the other experimental examples). As described above, "Ratio MF/MLi" in Table 1 is the ratio of the number of moles MF of the fluorinated cyclic monoether (F) included in the non-aqueous electrolyte to the number of moles MLi of the lithium salt included in the non-aqueous electrolyte. The number of moles of the lithium salt is the sum of the number of moles of $LiPF_6$ and the number of moles of LiFOB. As described above, "Ratio MF/MNF" in Table 1 is the ratio of the number of moles MF of the fluorinated cyclic monoether (F) included in the non-aqueous electrolyte to the number of moles MNF of the non-fluorinated ether (NF) included in the non-aqueous electrolyte.

[Table 1]

| Experimental example | Battery | Solvent | | | | Lithium salt | | Ratio MF/MLi | Ratio MF/MNF | Evaluation | |
|---|---|---|---|---|---|---|---|---|---|---|---|
| | | Fluorinated cyclic monoether (F) | Non-fluorinated ether (NF) | Others (X) | Molar ratio MF/MNF/MX | Type | Concentration (mol/L) | | | Cycle test temperature (°C) | **Capacity** retention rate (%) |
| EA1 | A1 | F-THF | DME | - | 3/1/0 | $LiFOB/LiPF_6$ | 0.05/1.0 | 5.0 | 3.0 | 25 | 84.6 |
| EA2 | A2 | F-THF | DME | - | 3/1/0 | $LiFOB/LiPF_6$ | 0.01/1.0 | 5.2 | 3.0 | 45 | 70.1 |
| EA3 | A1 | F-THF | DME | - | 3/1/0 | $LiFOB/LiPF_6$ | 0.05/1.0 | 5.0 | 3.0 | 45 | 76.4 |
| EA4 | A3 | F-THF | DME | - | 3/1/0 | $LiFOB/LiPF_6$ | 0.5/1.0 | 3.5 | 3.0 | 45 | 70.5 |
| EA5 | A4 | F-THF | DME | - | 1/10/0 | $LiFOB/LiPF_6$ | 0.05/2.5 | 0.25 | 0.1 | 45 | 70.7 |
| EA6 | A5 | F-THF | DME | - | 10/1/0 | $LiFOB/LiPF_6$ | 0.01/0.6 | 10 | 10 | 45 | 70.0 |
| EA7 | A6 | F-THP | DME | - | 3/1/0 | $LiFOB/LiPF_6$ | 0.05/1.0 | 5.0 | 3.0 | 45 | 71.2 |
| EC1 | C1 | - | DME | HFE | 0/1/3 | $LiPF_6$ | 1.0 | 0.0 | 0.0 | 25 | 83.0 |
| EC2 | C2 | F-THF | DME | - | 3/1/0 | $LiPF_6$ | 1.0 | 5.3 | 3.0 | 25 | 85.2 |
| EC3 | C3 | - | DME | F-DOL | 0/1/1 | $LiPF_6$ | 1.0 | 0.0 | 0.0 | 25 | 32.2 |
| EC4 | C4 | F-THF | DME | HFE | 1.5/1/1.5 | $LiPF_6$ | 1.0 | 4.2 | 1.5 | 25 | 84.2 |
| EC5 | C1 | - | DME | HFE | 0/1/3 | $LiPF_6$ | 1.0 | 0.0 | 0.0 | 45 | 63.2 |
| EC6 | C2 | F-THF | DME | - | 3/1/0 | $LiPF_6$ | 1.0 | 5.3 | 3.0 | 45 | 67.1 |
| EA8 | A7 | F-THF | DME | - | 3/1/0 | $LiFOB/LiPF_6$ | 0.005/1.0 | 5.2 | 3.0 | 45 | 68.2 |
| EA9 | A8 | F-THF | DME | - | 3/1/0 | $LiFOB/LiPF_6$ | 0.7/1.0 | 3.1 | 3.0 | 45 | 67.9 |
| EA10 | A9 | F-THF | DME | - | 1/12/0 | $LiFOB/LiPF_6$ | 0.05/2.5 | 0.2 | 0.08 | 45 | 68.8 |
| EA11 | A10 | F-THF | DME | - | 12/1/0 | $LiFOB/LiPF_6$ | 0.01/0.5 | 12.7 | 12.0 | 45 | 67.8 |
| EC7 | C5 | - | DME | HFE | 0/1/3 | $LiFOB/LiPF_6$ | 0.05/1.0 | 0.0 | 0.0 | 25 | 82.3 |
| EC8 | C6 | - | DME | HFE | 0/1/3 | $LiFOB/LiPF_6$ | 0.05/1.0 | 0.0 | 0.0 | 45 | 67.5 |

In Table 1, the acronyms of the compounds represent the following compounds. "F-THF" represents 3,3,4,4-tetrafluorotetrahydrofuran. "F-THP" represents 4-difluoromethyl tetrahydro-2H-pyran. "DME" represents 1,2-dimethoxyethane. "F-DOL" represents 2-(trifluoromethyl)dioxolan. "HFE" represents 1,1,2,2-tetrafluoroethyl-2,2,3,3-tetrafluoropropyl ether. LiFOB and $LiPF_6$ are each as described above.

As shown in Table 1, the batteries A1 to A10, which are the lithium secondary batteries (S) according to the present disclosure, had a high capacity retention rate even after the cycle test at 45°C. The battery A1 had a high capacity retention rate even after each of the cycle tests at temperatures of 25°C and 45°C. In the case of using the battery A1, the capacity retention rate determined in the test at 45°C was 90% (76.4/84.6) of the capacity retention rate determined in the test at 25°C. On the other hand, in the case of using the battery C1 according to a comparative example, the capacity retention rate determined in the test at 45°C was 76% (63.2/83.0) of the capacity retention rate determined in the test at 25°C. In the case of using the battery C2 according to a comparative example, the capacity retention rate determined in the test at 45°C was 79% (67.1/85.2) of the capacity retention rate determined in the test at 25°C.

As shown in Table 1, the lithium salt including the oxalate complex anion preferably has a concentration in the range from 0.01 to 0.5 mol/L in the non-aqueous electrolyte. The ratio MF/MLi is preferably in the range from 0.25 to 10. The ratio MF/NINF is preferably in the range from 0.1 to 10.

[Industrial Applicability]

The present disclosure is applicable to a lithium secondary battery.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

[Reference Signs List]

- 10 Lithium secondary battery
- 11 Positive electrode
- 12 Negative electrode
- 13 Separator
- 14 Electrode group
- 15 Case body
- 16 Sealing body
- 30 Positive electrode current collector
- 31 Positive electrode mixture layer
- 32 Negative electrode current collector

## Claims

**1.** A lithium secondary battery comprising:

a positive electrode; a negative electrode; and a non-aqueous electrolyte having lithium ion conductivity, wherein, in the negative electrode, lithium metal is deposited during charging, and the lithium metal is dissolved in the non-aqueous electrolyte during discharging,
the non-aqueous electrolyte includes a solvent and a lithium salt,
the solvent includes a non-fluorinated ether and a fluorinated cyclic monoether,
the fluorinated cyclic monoether includes a cyclic structure having one ether bond, and
the lithium salt includes an anion of an oxalate complex.

**2.** The lithium secondary battery according to claim 1, wherein a sum of a proportion of the non-fluorinated ether and a proportion of the fluorinated cyclic monoether in the solvent is 95 mol% or more.

**3.** The lithium secondary battery according to claim 1, wherein a ratio MF/MLi of a number of moles MF of the fluorinated cyclic monoether included in the non-aqueous electrolyte to a number of moles MLi of the lithium salt included in the

non-aqueous electrolyte is in a range from 0.25 to 10.

**4.** The lithium secondary battery according to claim 1, wherein a ratio MF/MNF of a number of moles MF of the fluorinated cyclic monoether included in the non-aqueous electrolyte to a number of moles MNF of the non-fluorinated ether included in the non-aqueous electrolyte is in a range from 0.1 to 10.

**5.** The lithium secondary battery according to claim 1, wherein the lithium salt including the oxalate complex anion has a concentration in a range from 0.01 to 0.5 mol/L in the non-aqueous electrolyte.

**6.** The lithium secondary battery according to claim 1, wherein the fluorinated cyclic monoether includes a 5-membered ring including one ether bond, or a 6-membered ring including one ether bond.

**7.** The lithium secondary battery according to claim 1, wherein the lithium salt including the oxalate complex anion is lithium difluoro(oxalate)borate.

**8.** The lithium secondary battery according to any one of claims 1 to 7, wherein the fluorinated cyclic monoether is 3,3,4,4-tetrafluorotetrahydrofuran.

FIG. 1

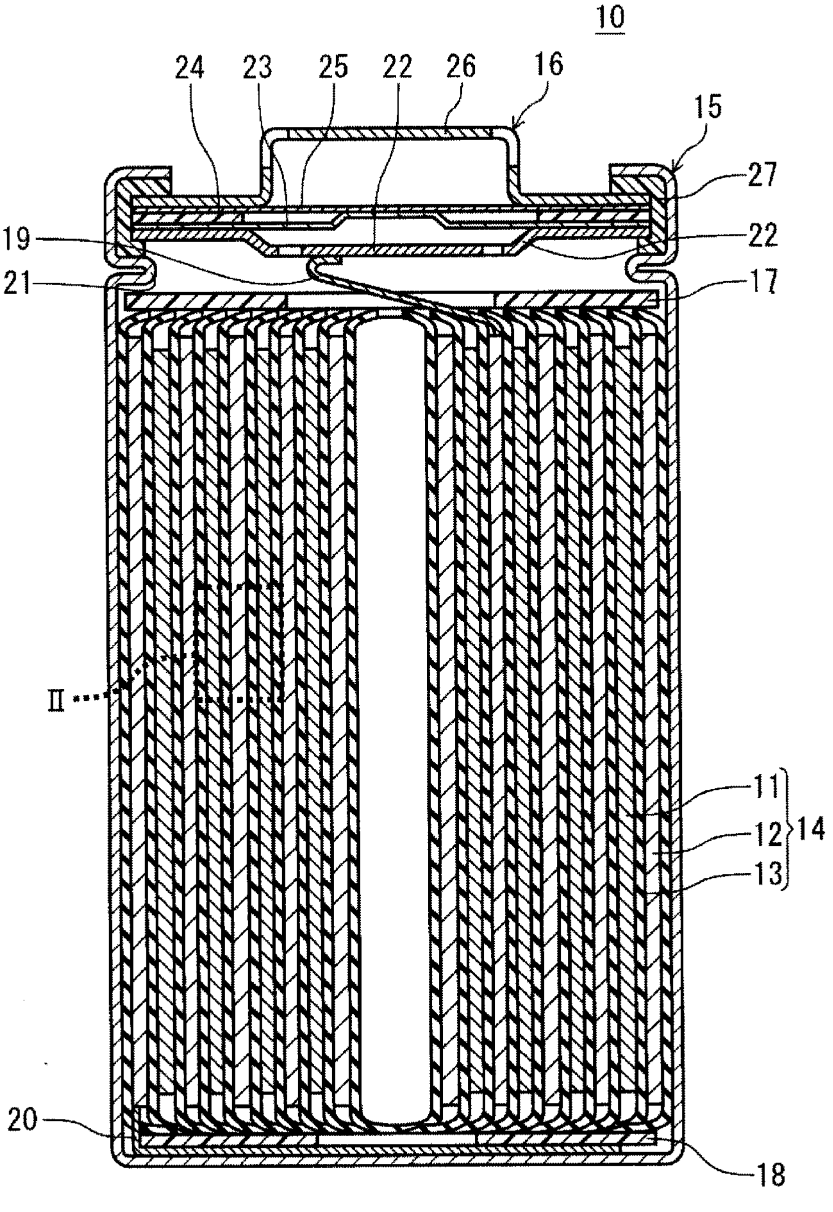

*FIG. 2*

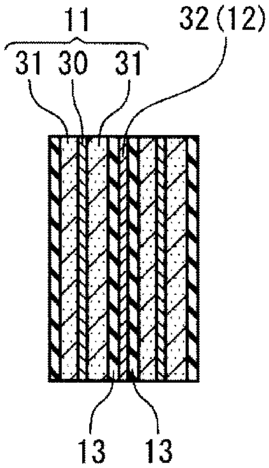

**INTERNATIONAL SEARCH REPORT**

International application No.
**PCT/JP2023/013219**

**A. CLASSIFICATION OF SUBJECT MATTER**

***H01M 10/052***(2010.01)i; ***H01M 4/134***(2010.01)i; ***H01M 4/40***(2006.01)i; ***H01M 10/0568***(2010.01)i; ***H01M 10/0569***(2010.01)i
FI: H01M10/052; H01M10/0569; H01M10/0568; H01M4/40; H01M4/134

According to International Patent Classification (IPC) or to both national classification and IPC

**B. FIELDS SEARCHED**

Minimum documentation searched (classification system followed by classification symbols)

H01M10/052; H01M4/134; H01M4/40; H01M10/0568; H01M10/0569

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2021-47987 A (TDK CORP.) 25 March 2021 (2021-03-25) | 1-8 |
| A | WO 2018/179782 A1 (PANASONIC INTELLECTUAL PROPERTY MANAGEMENT CO., LTD.) 04 October 2018 (2018-10-04) | 1-8 |
| A | JP 2019-216094 A (PANASONIC INTELLECTUAL PROPERTY MANAGEMENT CO., LTD.) 19 December 2019 (2019-12-19) | 1-8 |
| A | WO 2019/181278 A1 (PANASONIC INTELLECTUAL PROPERTY MANAGEMENT CO., LTD.) 26 September 2019 (2019-09-26) | 1-8 |
| A | WO 2020/066253 A1 (PANASONIC INTELLECTUAL PROPERTY MANAGEMENT CO., LTD.) 02 April 2020 (2020-04-02) | 1-8 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 June 2023** | **13 June 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/013219**

| Patent document cited in search report | Publication date (day/month/year) | Patent family member(s) | Publication date (day/month/year) |
|---|---|---|---|
| JP 2021-47987 A | 25 March 2021 | (Family: none) | |
| WO 2018/179782 A1 | 04 October 2018 | US 2021/0111429 A1 | |
| | | CN 109937504 A | |
| JP 2019-216094 A | 19 December 2019 | US 2019/0379035 A1 | |
| | | EP 3579325 A1 | |
| | | CN 110581306 A | |
| WO 2019/181278 A1 | 26 September 2019 | US 2021/0043970 A1 | |
| | | EP 3771015 A1 | |
| | | CN 111919325 A | |
| WO 2020/066253 A1 | 02 April 2020 | US 2022/0052381 A1 | |
| | | EP 3859861 A1 | |
| | | CN 112544008 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2013211095 A
- WO 2020202845 A